# NEW EUROPEAN PATENT SPECIFICATION

(11) **EP 0 627 581 B2**
(45) Date of publication and mention of the opposition decision: **02.01.2004**
(45) Mention of the grant of the patent: 22.04.1998
(21) Application number: 93304326.7
(22) Date of filing: 03.06.1993
(51) Int. Cl.: F16J 15/08

(54) **Metallic gasket**
Metalldichtung
Garniture metallique d'étanchéité

(43) Date of publication of application: 07.12.1994
(73) Proprietor: JAPAN METAL GASKET CO., LTD., Kumagaya-shi, Saitama-ken (JP)
(72) Inventor: Ueta, Kosaku c/o Japan Metal Gasket Co., Ltd., Saitama-ken (JP)
(74) Representative: Godwin, Edgar James

(56) References cited:
- EP-A- 0 230 804
- EP-A- 0 459 060
- EP-A- 0 485 693
- EP-A- 0 494 489
- DE-A- 2 343 311
- DE-A- 4 026 255
- JP-A- 6 435 057
- JP-A- 63 246 572
- JP-A- 63 293 363
- JP-U- 24 283
- US-A- 5 161 809

## Description

### BACKGROUND OF THE INVENTION

### Field of the Invention

The present invention concerns a metallic gasket disposed between joining faces of a cylinder head and a cylinder block that constitute an internal combustion engine, to prevent combustion gas blow through, and cooling water and lubricant or the like from leaking.

### Description of the Prior Art

In an internal combustion engine, a gasket is interposed between a cylinder block and a cylinder head to provide a seal between them. In particular, a seal at the periphery of a combustion chamber, that is, a cylinder bore is important and, if the seal is defective at that portion, the combustion gas in the bore blows out to decrease the gas pressure efficiency and the expected power output can not be obtained.

The gasket materials for a gasoline engine use a mixture of asbestos and rubber, having a spiked steel plate embedded therein. A bore side peripheral edge covered with a stainless steel plate and the peripheral edge of bolt holes covered with a copper plate respectively, are used countermeasure for a gap between the edge seal and the joining faces.

Further, for a diesel engine, a material comprising a mixture of asbestos and rubber and a wire gauze embedded therein is used as a countermeasure for a gap at the edge seal and the joining faces as described above and a fire ring is further engaged along the edge of the bore.

Such gaskets are referred to as soft gaskets. However, since asbestos is used in this gaskets, the use has become restricted, particularly, in view of environmental problems.

As far as the inventor knows, synthetic fibers are used instead of asbestos in gasoline engines. Further, for diesel engines, a structure comprising a steel laminate including a steel plate formed with a minute bead, a stainless steel subplate stacked thereon and a steel wire core is disposed to the bore peripheral edge. The subplate is folded back to cover the wire on the inside and extends along the upper surface of the edge of the bore hole. A baked rubber seal is disposed at the bolt holes.

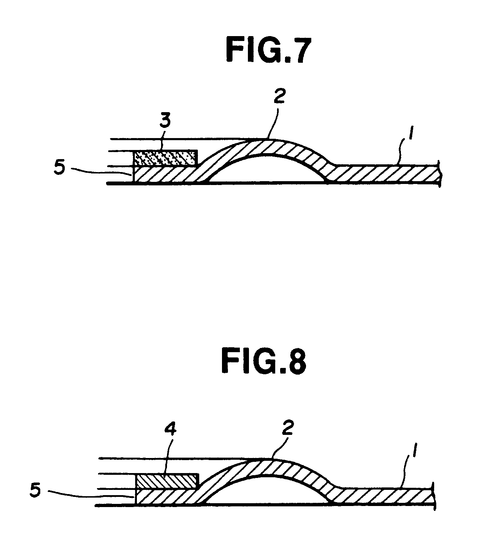

Further, there are also gasket as shown in Fig. 8 in which a stopper 4 comprising a shim is formed at a flat portion adjacent a bead 2 of an elastic steel iron base plate 1 on the side of a bore hole, a gasket as shown in Fig. 7 in which a stopper 3 formed by arc plasma spray at a flat portion adjacent a bead 2 of an elastic base plate 1 on the side of a bore hole, and a gasket with two intermediate plates bent outside with each other to open at a bore edge to which a stopper is formed also by arc plasma spray although not illustrated.

The soft gaskets are not satisfactory for providing reduced thickness or endurance to cope with decreasing distance between bores required by recent trend of engine weight and size reduction, material recycling, heat resistance, high performance, cost reduction and freedom of design. Eventually, the demand for metallic gaskets will increase in the automobile industry.

By the way, in a metallic gasket, a bead is formed along the periphery of holes, in particular, at the periphery of cylinder bore holes. When a metallic gasket is tightened between a cylinder head and a cylinder block, the bead is elastically deformed to function as a seal. Further, a stopper is formed In an annular shape from the bead toward the cylinder bore hole, that is, at the periphery of the bore hole in the metallic gasket. The stopper, by its thickness, suppresses vibrations at the joined area between the cylinder block and the cylinder head caused by the engine operation, so that it also functions as a sealing member to prevent fatigue failure because of engine vibration. In the metallic gasket, a complete seal is intended by attaining a primary seal with the stopper and a secondary bead seal compensated with the durability by the stopper.

The stopper must have a thickness corresponding to a gap in the engine, that is, a gap between the joined faces of the cylinder block and the cylinder head.

Recently, with the performance improvement due to the progress in the engine technology, fuel economy and the size and weight reduction, the distance between bores has been reduced and the rigidity of the engine has been reduced considerably. As a result, it is necessary to further increase the tightening pressure in view of the requirement for sealing an increasing explosive pressure and, inevitably, the spring force of the bead has to be increased. When such a highly elastic gasket is placed between the joining faces of the cylinder block and the cylinder and tightened with an enormous force, the surface pressure increases excessively near the bolts that are attributable to the tightening and the gap between the joining faces being reduced. On the other hand, the surface pressure decreases near the mid portion between the bolts, and tends to increase the gap.

Accordingly, a gasket is fabricated with a stopper by using a shim, and the shim has an identical thickness over the entire surface, the surface pressure between the joining faces at the periphery of the cylinder bore can not be uniform and, if tightening is applied excessively to attain a seal over the entire periphery, distortions occur at the periphery of the cylinder bore to deform the cylinder bore. Then it becomes difficult to ensure circularity of the cylinder bore due to uneven tightening pressure.

When using a stopper formed by arc plasma spray, it can cope with the difference of thickness depending on the position but it has a drawback in that the welding efficiency of the plasma spray is extremely low, the dimensional accuracy can not be ensured easily and, further, sufficient sealing can not be obtained with a low spray density.

Although examples of internal combustion engines have been made, that is, a gasoline engine or a diesel engine, similar problems, of course, exist due to unevenness of the surface pressure at the joining faces of a crank case or a differential case.

This invention has been accomplished in view of the foregoing situation and it is an object thereof to provide a metallic gasket capable of making the surface pressure uniform around the periphery of cylinder bores and, particularly, capable of ensuring the circularity of the cylinder bores.

As an example of the metallic gasket in the relevant prior art, the inventor has accomplished inventions as disclosed in Japanese Patent Laid-Open Hei 1 (1989)-104953, EP-A-0306766 and Japanese Patent Publication Hei 2 (1990) -58502 and, further, is well aware of Japanese Patent Laid-open Sho 62 (1987)-155376 and Japanese Patent Publication Hei 3 (1991) -20626 and Hei 4(1993) -40540 as prior art. EP-A-0459060 disclose metal gaskets in accordance with the preamble of claim 1.

### SUMMARY OF THE INVENTION

To attain the above-mentioned object, the invention provides a metal gasket as defined in claim 1 and 2.

Preferred embodiments are set forth in the subsidiary claims.

The stopper is secured to a plate member at a position corresponding to the flat portion at the periphery of a hole, it is formed to an increased thickness for a large gap, while it is formed to a decreased thickness for a smaller gap, depending on the size of the gap at the joining faces.

The gasket is applicable to joining faces of an engine, crank case, and differential case, as well as to all other equipment using a gasket.

In a case where the gasket is sandwiched between the joining faces of a cylinder block and a cylinder head of an engine, the hole on the plate member of the gasket may be a cylinder bore hole corresponding to an engine cylinder bore or a water hole or oil hole.

The stopper is formed by press forming using a metal mold (die).

Further, as described above, when the plate member comprises the base plates and the subplate, the gasket is constituted by disposing a flat portion on the side of the hole and a bead situated on the outer circumference thereof on each of the two base plates, respectively, opposing the base plates with the tops of their beads, that is, rear sides of the bead concaves facing each other, sandwiching a laminate of upper and lower two subplates between them, disposing the inner periphery of the hole of one of the subplates to the outside of the inner periphery of the hole of the base plate, while disposing the inner periphery of the hole of the other subplates at a position aligned with the inner periphery of the hole in the base plate, to constitute on the periphery of the hole in the other of the subplates a shelf-like edge, and welding and fixing a stopper having a predetermined thickness depending on the size of the gap between the joining faces over the entire circumference on the shelf-like edge, that is, at a position corresponding to the flat portion, thereby the mid portion for the thickness of the stopper faces the inner peripheral end of the upper subplate.

Further, in a case where the plate member comprises the base plates and the subplate as described above, the gasket may further be constituted by disposing a flat portion on the side of the hole and a bead situated to the outer circumference thereof to each of the two base plates, opposing the base plates with each of their bead tops, that is, rear sides of the bead concaves facing each other, sandwiching a subplate between them making a hole in the subplate larger by the width of the flat portion, welding and fixing a stopper of a trapezoidal cross section having the stopper to the inner peripheral end of the hole in the substrate, the inner thickness I₃ greater than the outer thickness I₁, press forming the thus fixed stopper corresponding to the size of the gap between joining faces that is predetermined over the entire circumference, thereby forming it to a thickness I₂ from the lateral mid portion to the inner peripheral end. Suitably, the stopper has a maximum thickness I₃ before forming which is greater by more than 50% of (maximum formed thickness I₂ - minimum formed thickness I₁) than I₂.

In this way, when the stopper is formed into a trapezoidal cross section with the inner thickness I₂ of the stopper greaterthan the outer thickness I₁ thereof, a sufficient difference in the thickness can be provided for the entire circumference. Further, the thickness I₃ before forming has such a value as is easily formable to the size conforming the gap between the joining faces.

That is, the stopper is disposed at a portion of a plate member corresponding to the flat portion on the side of the hole in the base plate.

In this constituted metallic gasket, since the stopper is formed from a metal material separate from that of the basic member such that it is formed to an increased thickness for a larger gap while it is formed to a decreased thickness for a smaller gap depending on the size of the gap between the joining faces, fabrication accuracy is high. Further, since the stopper is aligned with the size of the gap, the surface pressure around the hole in the joining faces is made uniform thereby providing an accurate seal. In particular, when the gasket is applied to the joining faces between the cylinder block and the cylinder head of an engine, tightening pressure at the joining faces is made uniform and there is no need for excessive tightening and, accordingly, there is no possibility of deformation around the cylinder bore, so that circularity of the cylinder bore can be ensured.

### BRIEF DESCRIPTION OF THE DRAWINGS

Fig. 1 is a plan view of a typical embodiment of a metallic gasket of the present invention;
Fig. 2 is a cross sectional view taken along line 2-2 in Fig. 1;
Fig. 3 is omitted;
Fig. 4 is a cross sectional view of a portion of another preferred embodiment;
Fig. 5 is a cross sectional view of a portion of another embodiment;
Fig. 6 is omitted;
Fig. 7 is a cross sectional view of an embodiment in the prior art; and
Fig. 8 is a cross sectional view of another embodiment in the prior art.

### DETAILED DESCRIPTION OF PREFERRED EMBODIMENTS

### Example 1

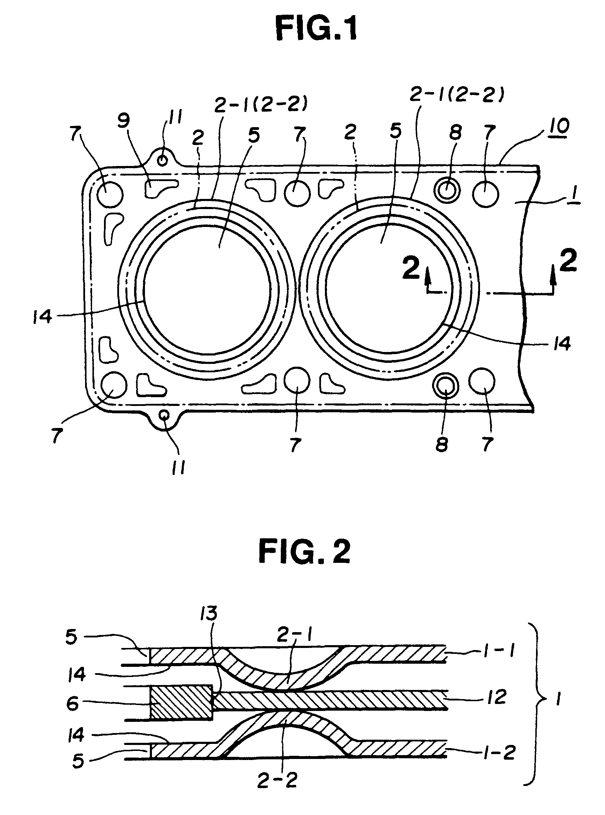

As shown in Fig. 1, a metallic gasket to be sandwiched between joining faces of a cylinder block and a cylinder head of an engine is entirely depicted as 10 and it comprises a metal plate member 1, in which a cylinder bore hole 5 is disposed as a hole, oil holes 8 and water holes 9 are also formed as holes. In the figure, reference numeral 7 denotes a bolt hole.

In this embodiment, the invention is applied to the circumferential periphery of the cylinder bore hole 5.

As can be seen, particularly, from Fig. 2, the metal plate member 1 has a laminate structure comprising two elastic metal plates base plates 1-1 and 1-2, having a subplate 12 made of a metal plate disposed between them.

As can be seen from Figs. 1 and 2, each of the base plates 1-1 and 1-2 has a concentric flat portion 14 at the periphery of the cylinder bore hole 5 and bead 2-1, 2-2 also concentrical with the cylinder bore hole 5 formed to the outer side of the flat portion 14.

The base plates 1-1 and 1-2 are opposed in parallel to each other, with each of their tops of the beads 2-1 and 2-2 formed to each of the base plates, that is, protrusions formed on the side opposite to the bead concaves (the center being shown as 2 in Fig. 1) being opposed to each other.

As seen from Fig. 2, the inner peripheral end of the cylinder bore hole 5 in the subplate 12 is at a position retracted from the cylinder bore hole 5 of the upper and lower base plates 1-1 and 1-2 disposed to the portion of the beads 2-1 and 2-2 at the periphery near the cylinder bore hole. That is, the cylinder bore hole 5 in the subplate 12 is made greater in the diameter than that of the cylinder bore hole 5 in the upper and the lower base plates 1-1 and 1-2.

A stopper shown by 6 in Fig. 2 is an annular metal plate member having 1 mm to 3 mm width and a thickness greater than that of the sub-plate 12 and it is formed by a metal mold.

The stopper is welded and secured after forming to the inner circumferential end 13 of the cylinder bore hole 5 in the subplate 12.

Forming may, of course, be applied also after securing to the plate member 1.

The stopper 6 is situated at a portion corresponding to a flat portion 14 of the plate member 1, that is, the base plates 1-1 and 1-2 near their cylinder bore hole 5.

The stopper 6 supports the flat portion 14 when the beads 2-1 and 2-2 of the elastic metal plates 1-1 and 1-2 are diverged and deformed by the vibrations of the engine or the joining pressure at the joining faces, thereby suppressing excessive deformation or excessive vibrations of the beads 2-1 and 2-2.

The stopper 6 is formed by a press using a metal mold (die) with previous adjustment to the thickness corresponding to the size of the gap between the joining faces of the cylinder block and the cylinder head of the engine over the entire circumference thereof.

That is, bolt holes 7 are disposed at several positions around the cylinder bore hole 5 equally divided circumferentially into four sections and the stopper 6 is formed by using a metal mold that decreases the thickness of the stopper 6 at a portion near the bolt hole 7 and increases the thickness thereof at a mid portion between the bolt holes 7.

The stopper 6 is beforehand formed corresponding to the gap between the joining faces, but it is not restricted only to the above. The stopper may be secured to a plate member 1 (base plate 1-1 in this case) and then formed to the size of the predetermined gap.

The plate member 1 is integrated by spot welding at equally spaced positions.

In this way, according to this preferred embodiment, the metallic gasket 10 can cope with the gap between the joining faces of the cylinder block and the cylinder head by only the formed stopper 6 and can provide an effective seal to ensure good circularity for the cylinder bore with no deformation around the cylinder caused by excessive surface pressure between the joining faces. In this case, if there are marks, with reference to the circumferential position to the base plate 1-1, on the periphery of the cylinder bore of the base plate 1-1 and on the stopper 6, it is convenient for aligning the thickness of stopper 6.

Example 2 is omitted.

### Example 3

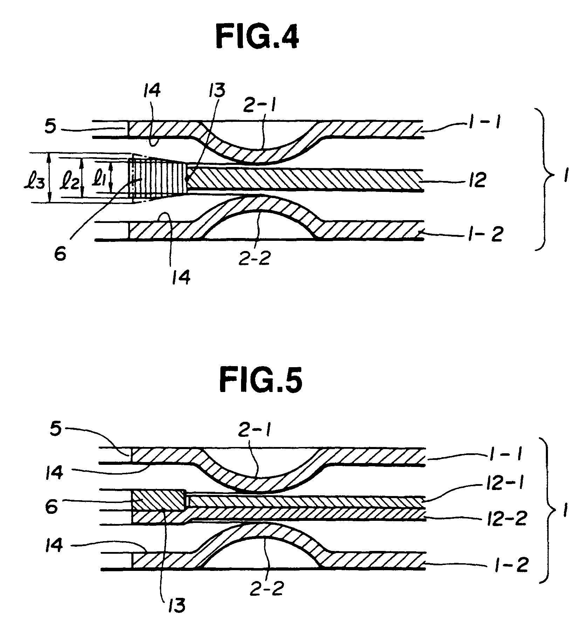

Fig. 4 shows a different preferred embodiment.

That is, two base plates 1-1 and 1-2 each having a flat portion 14 having an adjacent cylinder bore hole 5 formed at the inside thereof and beads 2-1, 2-2 concentrically formed to the cylinder bore hole 5 situated outside of the outer circumference thereof are disposed in parallel with each other at a position such that the rear sides of the concaves for the beads 2-1 and 2-2 face each other. A subplate 12 is disposed between the base plates 1-1 and 1-2.

The diameter of the cylinder bore hole 5 in the subplate 12 is made greater than that of the cylinder bore hole 5 in the upper and lower base plates 1-1 and 1-2.

Then, an annular stopper 6 similar to that in the previous embodiment is secured at the outer peripheral end face thereof to the inner peripheral end face of the bore hole in the subplate 12. The stopper 6 has a trapezoidal cross section as shown by the dotted chain before forming. The thickest portion at the inner peripheral end has a thickness I₃, while the thinnest portion at the outer peripheral end has a thickness I₁. When the stopper 6 is press formed, upper and lower horizontal surfaces are formed from the lateral mid portion, and a maximum thickness I₂ is formed for a range from the horizontal portion to the inner peripheral end. The stopper 6 may be entirely formed beforehand, using a metal die, and press forming is applied to obtain the final shape.

Further, forming may, of course, be applied after or before securing to the subplate 12.

The thickness I₂ is previously determined depending on the size of the gap between the joining faces over the entire circumference.

In adjusting the thickness of the stopper 6, it is formed such that it has a dimensional relationship: I₂ > I₁. This facilitates the procedure of at first securing the stopper 6 to the subplate 12 and, subsequently, forming the size corresponding to the gap which differs depending on the position of the joining faces.

When adjusting the thickness by the forming, it is preferable to make the stopper 6 such that the thickness I₁ is set to a minimum value for the formed size, and the value I₃ for the dimension before is made greater by 50% of (maximum formed thickness I₂ - minimum formed thickness I₁) than I₂ to provide a sufficient range for adjustment.

Also in this case, the plate member 1 is integrated by grommet bonding at the holes 11 shown in Fig. 1 at equally divided positions.

### Example 4

Fig. 5 shows a variation of a preferred embodiment.

That is, when the plate member 1 comprises the base plates 1-1 and 1-2 and the subplate 12, each of the two base plates 1-1 and 1-2 has a flat portion 14 adjacent with the cylinder bore hole 5 formed at the inside and bead 2-1, 2-2 disposed to the outer circumference thereof. The base plates 1-1 and 1-2 are opposed to each other with the respective tops of the beads 2-1 and 2-2, that is, the rear sides of the bead concaves being opposed to each other. Upper and lower two subplates 12-1 and 12-2 are laminated and sandwiched between the base plates. The inner periphery of the cylinder bore hole 5 in the upper subplate 12-1 is disposed outside of the inner periphery of the cylinder bore holes 5 in the base plates 1-1 and 1-2 within a range of the flat portion 14, while the inner periphery of the cylinder bore hole 5 in lower subplates 12-2 is situated at a position aligned with the inner periphery of the cylinder bore hole 5 of the base plates 1-1 and 1-2. A range from the inner periphery of the cylinder bore hole 5 to the flat portion 14 is constituted as a stepped-down like edge, and a stopper 6 the thickness of which is previously determined depending on the size of the gap between the joining faces is welded and secured on the shelf-like edge, that is, at a position corresponding to the flat portion 14 while opposing the mid portion of the thickness thereof to the inner peripheral end of the subplate 12-1.

Again, the stopper 6 is previously formed, using a metal die.

In this way, adjustment of the thickness to the gap between the joining faces or improvement of the sealing function can be facilitated.

Also in this case, the plate member 1 is entirely integrated by grommet bonding at the holes 11 in Fig. 1 at equally divided positions.

According to the present invention, since the stopper is made of a different material from that of the plate and is press formed, and the thickness of the stopper is predetermined in relation to the size of the gap which varies depending on the position of the joining faces, it can be sandwiched accurately matching the gap and can provide an effective seal without being hampered by the restriction of the plate thickness. Then, the surface pressure around the holes can be made uniform and, uneven surface pressure on the joining face can be avoided around cylinder bore seal, so that the circularity of the cylinder bore can be ensured. Also a very safe and high performance gasket can be obtained in which a primary seal is provided by the stopper, and a secondary seal is provided by beads.

## Claims

1. A metallic gasket to be disposed between joining faces, wherein:
a plate member (1) comprises a laminate structure (Fig. 2) of two elastic metal base plates (1-1, 1-2) and an intermediate plate (12) therebetween;
each base plate (1-1, 1-2) has a flat portion (14) at the periphery of a hole (5) in the plate member (1), and a bead (2-1, 2-2) disposed to the outside of the flat portion (14) concentrically with the hole (5);
the crests of the beads (2-1, 2-2) are opposed to each other;
compensation means of variable thickness is provided between the flat portions (14) of the base plates (1-1, 1-2);
the compensation means comprises an annular stopper (6) radially inside the beads (2-1, 2-2), the annular stopper being adjacent the hole (5) in the plate member (1);
the thickness of the annular stopper (6) varies circumferentially; and
the annular stopper (6) is a separate metal plate different from the intermediate plate (12);
**characterised in that**:
the annular stopper (6) is press formed and is thicker than the intermediate plate (12); and
an outer peripheral face of the annular stopper (6) is welded to an inner peripheral face of the intermediate plate (12) so that an inner peripheral face of the annular stopper is aligned with inner peripheral faces of the two base plates (1-1,1-2).

2. A metallic gasket to be disposed between joining faces, wherein:
a plate member (1) comprises a laminate structure (Fig. 5) of two elastic metal base plates (1-1, 1-2) and at least one intermediate plate therebetween;
each base plate (1-1, 1-2) has a flat portion (14) at the periphery of a hole (5) in the plate member (1), and a bead (2-1, 2-2) disposed to the outside of the flat portion (14) concentrically with the hole (5);
the crests of the beads (2-1, 2-2) are opposed to each other;
compensation means of variable thickness is provided between the flat portions (14) of the base plates (1-1, 1-2);
the compensation means comprises an annular stopper (6) radially inside the beads (2-1, 2-2), the annular stopper being adjacent the hole (5) in the plate member (1);
the thickness of the annular stopper (6) varies circumferentially; and
the annular stopper (6) is a separate metal plate different from the intermediate plate (12);
**characterised in that**:
upper and lower intermediate plates (12-1, 12-2) are sandwiched between the crests of the beads (2-1, 2-2), the periphery of a hole in one intermediate plate (12-1) is disposed outside the inner periphery of the hole (5) in the plate member (1), while the periphery of a hole in the other intermediate plate (12-2) is aligned with the periphery of the hole (5) in the plate member (1), thereby forming a flat portion of the said other intermediate plate (12-2) as a shelf-like peripheral edge portion;
the annular stopper (6) is press formed and is thicker than the said one intermediate plate (12-1); and
the annular stopper (6) is secured over the entire circumference on the shelf-like peripheral edge portion of the said other intermediate plate (12-2), by welding.

3. A metallic gasket as claimed in claim 1, wherein:
the annular stopper (6) has a trapezoidal cross-section before forming, in which the thickness (l₁) at the outer periphery is smaller and the thickness (l₃) at the inner periphery is larger, and after forming, the annular stopper (6) has horizontally extending upper and lower surfaces from a lateral mid portion to the inner periphery, the maximum thickness (l₃) at the inner periphery before forming being greater than the maximum thickness (l₂) at the inner periphery after forming by more than 50% of a value (l₂ - l₁) obtained by subtracting the thickness (l₁) at the outer periphery from the maximum thickness (l₂) at the inner periphery after forming.

4. A metallic gasket as claimed in any preceding claim, wherein the hole (5) in the plate member (1) corresponds to an engine cylinder bore hole, the plate member (1) has a plurality of bolt holes (7), and the annular stopper (6) is formed such that its thickness at a portion near each bolt hole (7) is decreased while its thickness at a portion corresponding to the region between the bolt holes (7) is increased.

## Patentansprüche

1. Metallische Dichtung, die dazu bestimmt ist, zwischen aneinandergrenzenden Flächen angeordnet zu werden, wobei:
ein Plattenelement (1) eine Laminatstruktur (Fig. 2) aus zwei elastischen Metallgrundplatten (1-1, 1-2) und einer dazwischen angeordneten Zwischenplatte (12) aufweist;
jede Grundplatte (1-1, 1-2) einen flachen Bereich (14) bei dem Umfang eines Lochs (5) in dem Plattenelement (1), und einen auf der äußeren Seite des flachen Bereichs (14) konzentrisch zu dem Loch (5) angeordneten Wulst (2-1, 2-2) hat;
die Wölbungen der Wulste (2-1, 2-2) einander gegenüberliegen;
ein Kompensationsmittel von variabler Dicke zwischen den flachen Bereichen (14) der Grundplatten (1-1, 1-2) vorgesehen ist;
das Kompensationsmittel radial innerhalb der Wulste (2-1, 2-2) eine ringförmige Sperre (6) aufweist, wobei die ringförmige Sperre an das Loch (5) in dem Plattenelement (1) angrenzt;
die Dicke der ringförmigen Sperre (6) über den Umfang variiert; und
die ringförmige Sperre (6) eine getrennte Metallplatte ist, die verschieden von der Zwischenplatte (12) ist;
**dadurch gekennzeichnet, daß**:
die ringförmige Sperre (6) preßgeformt ist und dicker als die Zwischenplatte (12) ist; und
eine äußere Umfangsfläche der ringförmigen Sperre (6) an eine innere Umfangsfläche der Zwischenplatte (12) so angeschweißt ist, daß eine innere Umfangsfläche der ringförmigen Sperre entsprechend den inneren Umfangsflächen der zwei Grundplatten (1-1, 1-2) ausgerichtet ist.

2. Metallische Dichtung, die dazu bestimmt ist, zwischen aneinandergrenzenden Flächen angeordnet zu werden, wobei:
ein Plattenelement (1) eine Laminatstruktur (Fig. 5) aus zwei elastischen Metallgrundplatten (1-1, 1-2) und mindestens einer dazwischen angeordneten Zwischenplatte aufweist;
jede Grundplatte (1-1, 1-2) einen flachen Bereich (14) bei dem Umfang eines Lochs (5) in dem Plattenelement (1), und einen auf der äußeren Seite des flachen Bereichs (14) konzentrisch zu dem Loch (5) angeordneten Wulst (2-1, 2-2) hat;
die Wölbungen der Wulste (2-1, 2-2) einander gegenüberliegen;
ein Kompensationsmittel von variabler Dicke zwischen den flachen Bereichen (14) der Grundplatten (1-1, 1-2) vorgesehen ist;
das Kompensationsmittel radial innerhalb der Wulste (2-1, 2-2) eine ringförmige Sperre (6) aufweist, wobei die ringförmige Sperre an das Loch (5) in dem Plattenelement (1) angrenzt;
die Dicke der ringförmigen Sperre (6) über den Umfang variiert; und
die ringförmige Sperre (6) eine getrennte Metallplatte ist, die verschieden von der Zwischenplatte (12) ist;
**dadurch gekennzeichnet, daß**:
eine obere und untere Zwischenplatte (12-1, 12-2) zwischen den Wölbungen der Wulste (2-1, 2-2) angeordnet sind, und der Umfang eines Lochs in einer Zwischenplatte (12-1) außerhalb des inneren Umfangs des Lochs (5) in dem Plattenelement ( 1 ) angeordnet ist, während der Umfang eines Lochs in der anderen Zwischenplatte (12-2) entsprechend dem Umfang des Lochs (5) in dem Plattenelement (1) ausgerichtet ist, wodurch ein flacher Bereich der anderen Zwischenplatte (12-2) in Form eines simsähnlichen Umfangsrandbereichs gebildet wird;
die ringförmige Sperre (6) preßgeformt ist und dicker als die Zwischenplatte (12-1) ist; und
die ringförmige Sperre (6) über den gesamten Umfang auf dem simsähnlichen Umfangsrandbereich der anderen Zwischenplatte (12-2) durch Schweißen befestigt ist.

3. Metallische Dichtung wie in Anspruch 1 beansprucht, wobei:
die ringförmige Sperre (6) vor dem Formen einen trapezförmigen Querschnitt hat, bei dem die Dicke (l₁) bei dem äußeren Umfang kleiner ist, und die Dicke (l₃) bei dem inneren Umfang größer ist, und die ringförmige Sperre (6) nach dem Formen eine obere und eine untere Oberfläche hat, die sich von einem seitlichen mittleren Bereich bis zu dem inneren Umfang horizontal erstrecken, wobei die maximale Dicke (l₃) bei dem inneren Umfang vor dem Formen um mehr als 50% eines Wertes (l₂-l₁), der durch Subtrahieren der Dicke (l₁) bei dem äußeren Umfang von der maximalen Dicke (l₂) bei dem inneren Umfang nach dem Formen erhalten wird, größer ist als die maximale Dicke (l₂) bei dem inneren Umfang nach dem Formen.

4. Metallische Dichtung wie in irgendeinem vorhergehenden Anspruch beansprucht, wobei das Loch (5) in dem Plattenelement (1) einem Motorzylinderbohrungsloch entspricht, das Plattenelement (1) eine Vielzahl von Schraubenlöchern (7) hat, und die ringförmige Sperre (6) so geformt ist, daß ihre Dicke in einem Bereich nahe bei jedem Schraubenloch (7) verkleinert ist, während ihre Dicke in einem Bereich, der dem Gebiet zwischen den Schraubenlöchern (7) entspricht, vergrößert ist.

## Revendications

1. Joint métallique destine à être agencé entre deux surfaces de jonction, dans lequel:
un élément de plaque (1) comprend une structure stratifiée (figure 2) de deux plaques de base métalliques élastiques (1-1, 1-2), une plaque intermédiaire (12) étant agencée entre elles; chaque plaque de base (1-1, 1-2) comporte une partie plate (14) au niveau de la périphérie d'un trou (5) dans l'élément de plaque (1), et un bourrelet (2-1, 2-2) agencé vers l'extérieur de la partie plate (14), de manière concentrique au trou (5);
les crêtes des bourrelets (2-1, 2-2) sont opposées; un moyen de compensation d'épaisseur variable est agencé entre les parties plates (14) des plaques de base (1-1, 1-2);
le moyen de compensation comprend une butée annulaire (6) agencée radialement vers l'intérieur des bourrelets (2-1, 2-2), la butée annulaire étant adjacente au trou (5) dans l'élément de plaque (1); l'épaisseur de la butée annulaire (6) varie le long de la circonférence; et
la butée annulaire (6) est constituée par une plaque métallique séparée différente de la plaque intermédiaire (12);
**caractérisé en ce que**:
la butée annulaire (6) est formée par estampage et est plus épaisse que la plaque intermédiaire (12); et
une face périphérique externe de la butée annulaire (6) est soudée sur une face périphérique interne de la plaque intermédiaire (12), de sorte qu'une face périphérique interne de la butée annulaire est alignée avec les faces périphériques internes des deux plaques de base (1-1, 1-2).

2. Joint métallique destiné à être agencé entre des faces de jonction, dans lequel:
un élément de plaque (1) comprend une structure stratifiée (figure 5) de deux plaques de base métalliques élastiques (1-1, 1-2), au moins une plaque intermédiaire étant agencée entre elles;
chaque plaque de base (1-1, 1-2) comporte une partie plate (14) au niveau de la périphérie d'un trou (5) dans l'élément de plaque (1), et un bourrelet (2-1, 2-2) agencé vers l'extérieur de la partie plate (14), de manière concentrique au trou (5);
les crêtes des bourrelets (2-1, 2-2) sont opposées;
un moyen de compensation d'épaisseur variable est agencé entre les parties plates (14) des plaques de base (1-1, 1-2);
le moyen de compensation comprend une butée annulaire (6) agencée radialement vers l'intérieur des bourrelets (2-1, 2-2), la butée annulaire étant adjacente au trou (5) dans l' élément de plaque (1);
l'épaisseur de la butée annulaire (6) varie le long de la circonférence; et
la butée annulaire (6) est constituée par une plaque métallique séparée différente de la plaque intermédiaire (12);
**caractérisé en ce que**:
des plaques intermédiaires supérieure et inférieure (12-1, 12-2) sont agencées en sandwich entre les crêtes des bourrelets (2-1, 2-2), la périphérie d'un trou dans une plaque intermédiaire (12-1) étant agencée vers l'extérieur de la périphérie interne du trou (5) dans l'élément de plaque (1), la périphérie d'un trou dans l'autre plaque intermédiaire (12-2) étant alignée avec la périphérie du trou (5) dans l'élément de plaque (1), formant ainsi une partie plate de ladite autre plaque intermédiaire (12-2) sous forme d'une partie de bordure périphérique en forme de tablette;
la butée annulaire (6) est formée par estampage et est plus épaisse que ladite plaque intermédiaire (12-1); et
la butée annulaire (6) est fixée par soudage au-dessus de l'ensemble de la circonférence sur la partie de bordure périphérique sous forme de tablette de ladite autre plaque intermédiaire (12-2).

3. Joint métallique selon la revendication 1, dans lequel:
la butée annulaire (6) a une section transversale trapézoïdale avant le formage, l'épaisseur (l₁) au niveau de la périphérie externe étant réduite et l'épaisseur (l₃) au niveau de la périphérie interne étant accrue, la butée annulaire (6) comportant après le formage des surfaces supérieure et inférieure s'étendant horizontalement à partir d'une partie médiane latérale vers la périphérie interne, l'épaisseur maximale (l₃) au niveau de la périphérie interne avant le formage dépassant l'épaisseur maximale (l₂) au niveau de la périphérie interne après le formage de plus de 50% d'une valeur (l₂ - l₁) déterminée par soustraction de l'épaisseur (l₁) au niveau de la périphérie externe de l'épaisseur maximale (l₂) au niveau de la périphérie interne après le formage.

4. Joint métallique selon l'une quelconque des revendications précédentes, dans lequel le trou (5) dans l'élément de plaque (1) correspond à un alésage de cylindre d'un moteur, l'élément de plaque (1) comportant plusieurs trous de boulon (7) et la butée annulaire (6) étant formée de sorte que son épaisseur au niveau d'une partie proche de chaque trou de boulon (7) est réduite, son épaisseur au niveau d'une partie correspondant à la région entre les trous de boulon (7) étant accrue.
